(19) Europäisches Patentamt
European Patent Office
Office européen des brevets

(11) EP 1 553 135 A1

(12) **EUROPEAN PATENT APPLICATION**
published in accordance with Art. 158(3) EPC

(43) Date of publication:
**13.07.2005 Bulletin 2005/28**

(21) Application number: **03766106.3**

(22) Date of filing: **23.07.2003**

(51) Int Cl.[7]: **C08L 5/08**, C09K 5/16, C02F 1/62, C02F 11/14, B09B 3/00, B09C 1/02

(86) International application number:
**PCT/CN2003/000589**

(87) International publication number:
**WO 2004/013219 (12.02.2004 Gazette 2004/07)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **24.07.2002 CN 02125605**

(71) Applicant: **Shandong Meilinya Bio-Tech Co. Ltd.**
**Jinan, Shandong 250014 (CN)**

(72) Inventors:
- **REN, Qisheng**
**Beijing 100050 (CN)**
- **SONG, Xinrong**
**Beijing 100050 (CN)**
- **LI, Jianqing**
**Beijing 100050 (CN)**
- **MA, Rui**
**Beijing 100050 (CN)**
- **MEI, Zongfu**
**Beijing 100050 (CN)**
- **MA, Xinyun**
**Beijing 100050 (CN)**

(74) Representative: **Rupprecht, Kay, Dipl.-Ing. et al**
**Meissner, Bolte & Partner,**
**Widenmayerstrasse 48**
**80538 München (DE)**

(54) **A HEAVY MAETAL CHELATE COMPOSITION CONTAINING CHITOSAN DERIVATIVES AND USES THEREOF**

(57) This patent provides a kind of chelator compound of heavy metals containing chitosan (CTS) derivatives, which contains the following contents:

| Components | Content WT% |
|---|---|
| Containing at least one dithio-formate (dithiocarbamate) CTS derivatives | 1-100 |
| Containing at least one dithio-formate (dithiocarbamate) polyamine derivatives | 0-99 |

This chelator compound of heavy metals is suitable for the treatment of the wastewater, waste mud, and garbage burned ash that contains heavy metals, or the soil polluted by heavy metal ions.

EP 1 553 135 A1

## Description

### Fields of Invention

This invention is affiliated to the field of environmental protection, especially to the fields of wastewater, waste solids that polluted by harmful heavy metal ions. This invention is involved in a kind of chelator compound of heavy metals and its applications in the treatment of the wastewater, waste mud, and garbage burned ash containing heavy metals, or the soil polluted by heavy metal ions.

### Technical Background

Water is the basic yet the most valued resource that cannot be replaced for human beings living. With the society and economic development, the demand for fresh water is increasing, however, due to the intensive development in the industries, especially in the development of mechanical, mining, metallurgical, and chemical industries, the pollution to waters of rivers, lakes and seas caused by the industrial waste water is becoming severe. Among the heavy metals ions, Hg, Pb, Cd, Cu, Zn, Mn, Cr and As etc have been doing harm to the health of human beings in various countries and areas in the world. The water resource crisis is becoming the bottleneck for those countries to further development. In the early 1950s, the pollution caused by heavy metal ions had been seriously concerned of popularly, with the increasing development of industries, ions of Hg, Pb, Cd, Cu, Zn, Mn, Cr and As etc are very dangerous to the health of human beings. Thus, people are more and more concerned of the treatment of such heavy metal ions, and proposed many treatment processes, among which chemical sedimentation and flocculation processes are used most widely by using various chemical flocculants. However, those chemical reagents are sodium hydroxide and calcium hydroxide etc, they themselves are also the pollution resources during production and they form the unstable sediments in the treatment. For that reason, many countries in the world recently have adopted stricter regulations and criteria to prevent pollution of water from heavy metal ions, requiring that the contents of such ions in the wastewater be lower than allowed, proposing many processes to remove such metal ions from wastewater. Such well known processes include chemical processes (sedimentation, oxidation-reduction etc), ion resins exchange, electrolysis, absorption, elecrodialysis, condensation, biotechnological processes etc. Among those processes, the equipment costs are large for the physical ones, thus chemical sedimentation processes are widely used, in which the heavy metal ions are removed in the forms of hydroxides or sulfides. Due to the somewhat solubility of the hydroxides in water, it is hard to completely remove the heavy metal ions from water, furthermore, those hydroxides are not so chemically stable that when they meet the acid rain, they will be partially resolved and produce the further pollution to the environment.

One of the purposes of this invention is to offer a chelator compound of heavy metals that can remove the little amount of heavy metal ions and form stable chelate compounds that is impossible by using the sedimentation processes. By using this chelator compound in the treatment, the produced chelate compound is quickly formed and it is convenient to separate it from water, and since it is chemically stable, it will not produce any further pollution to the environment.

On the other hand, with the faster paces of industrialization and urbanization, the amount of dangerous waste and hazards from living and production is in extremely huge increasing. Considering their serious impacts on the environment, the environmental planning department of the United Nations (UN) in 1983 had given out the warnings that the hazards pollution was as severe as the global environmental problems of acid rain, hotter weather and ozone protection. Urban garbage is one of the resources of the dangerous waste and hazards, urban garbage treatment without harm is the basic approach. To save the agricultural lands and protect the underground water resources, and in the cities with large populations, burning instead of filling and burying urban garbage is the trend. During the garbage burning, the produced ash contains high contents of heavy metals, in order to prevent the solution of the dangerous components, reduce the migration of heavy metals ions into the environment, and minimize the amount of such garbage and realize the resources utilization, the waste stabilization and solidification is more and more seriously considered. Based on the disadvantage that the volume increasing of the traditional solidification methods, the chemical reagents for stabilization are being in development.

Another purpose for this invention is to offer a kind of chelator compound of heavy metals containing chitosan (CTS) derivatives to apply for the treatment of the garbage burned ash that contains heavy metals, and the soil polluted by heavy metal ions. When it is mixed with the wastes containing heavy metal ions, under the suitable conditions, the heavy metal ions in the wastes will form into chelate compounds that are difficult to be dissolved, thus realize the purposes of treatment without harm and meet the requirements of garbage filling or burying.

**Contents of Invention**

More especially, this patent provides a kind of chelator compound of heavy metals containing chitosan (CTS) derivatives. This chelator compound of heavy metals is applied to the treatment of the wastewater, waste mud, and garbage burned ash that contains heavy metals, or the soil polluted by heavy metal ions. The described chelator compound of heavy metals contains CTS derivatives at least 1-100%wt, those containing 1-25% will be optimized and selected as priority; the rest contents are polyamine derivatives. The CTS derivatives adopted in this invention as primary component are from the naturally regenerated resources, so it will be not only an economical way for utilizing the waste, but also form chemically stable and easy for solidification chelate compounds that will not produce any further pollution to the environment. Compared with the similar products in foreign countries, this product is cheap in price and it is simpler to use. There are sufficient resources of shells in China, and hundreds of enterprises have produced chitin and CTS using animal shells as raw materials initially, and they can be further processed to the products in this invention. During the production, there are no waste solids, neither waste liquids nor waste gases to the environment.

Another purpose for this patent is to provide a kind of chelator compound of heavy metals containing chitosan (CTS) derivatives and polyamine derivatives. This chelator compound of heavy metals is appled to the treatment of the wastewater, waste mud, and garbage burned ash that contains heavy metals, or the soil polluted by heavy metal ions. When chitosan (CTS) derivatives and polyamine derivatives are used in the same process, it widens the scope of ions capturing, strengthens the synergistic effects and simplifies the treatment processes, lowers the costs and enhances the treatment satisfaction. In this paper, %WT indicates the weight percentages.

This invention also provides the treatment of the wastewater, waste mud, and garbage burned ash that contains heavy metals, or the soil polluted by heavy metal ions. The treatment uses the synergistic chelator compound of heavy metals containing chitosan (CTS) derivatives and polyamine derivatives. The used synergistic chelator compound of heavy metals containing chitosan (CTS) derivatives and polyamine derivatives contains the following contents:

| Components | Content %WT |
|---|---|
| At least one dithio-formate (dithiocarbamate) CTS derivatives | 1-100 |
| At least one dithio-formate (dithiocarbamate) polyamine derivatives | 0-99 |

For the purpose of optimization and selection by priority, the synergistic chelator compound of heavy metals containing chitosan (CTS) derivatives and polyamine derivatives contains the following contents:

| Components | Content %WT |
|---|---|
| At least one dithio-formate (dithiocarbamate) CTS derivatives | 1-25 |
| At least one dithio-formate (dithiocarbamate) polyamine derivatives | 75-99 |

The described CTS derivatives that carry at least one dithio-formate (dithiocarbamate) has the general structural formula I:

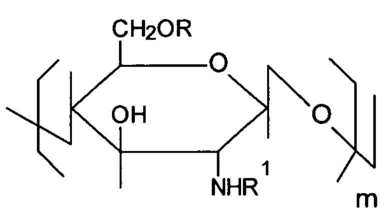

General structural formula I

Where:
R : H Or

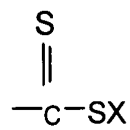

(X: Na, K, $NH_4$, 1/2Ca, 1/2Mg)
R':H,

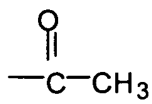 or 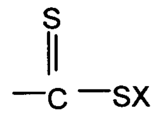

(X: Na, K, $NH_4$, 1/2Ca, 1/2Mg)
m: an integer in the range of 10~100000.

The described CTS derivatives that carry at least one dithio-formate (dithiocarbamate) especially mean that the CTS derivatives' all sugar rings at the 2- carbon amino or the 6- carbon of hydroxyl contains at least one dithio-formate (dithiocarbamate).

The described CTS derivatives are the chitosan (CTS), oligosaccharide and chitin derivatives. The described CTS derivatives are the chitosan (CTS), oligosaccharide and chitin derivatives with molecular weight greater than or equals to 500.

Optimized by priority, the described CTS derivatives with general structural formula I, the functionality is in the range of 0.1 and 1.0mmol/g of CTS. Optimized on more priority, it has the functionality in the range of 0.2and 0.8mmol/g of CTS.

Optimized on more priority, the described CTS derivatives with general structural formula I are the chitosan (CTS), oligosaccharide and chitin derivatives carrying one or more sodium dithiocarbamate, potassium dithiocarbamate, ammonium dithiocarbamate, calcium dithiocarbamate, magnesium dithiocarbamate, the functionality is in the range of 0.1 and 1.0mmol/g of CTS.

The CTS derivatives described in this invention can be manufactured in this way: with the CTS and carbon disulfide in presence of the base, the active H on the amino is replaced and formed the dithio-formate (dithiocarbamate) CTS derivatives, or, hydroxyl conducts the xanthogenate reaction and then formed into xanthogenate. The base mentioned here is selected on priority in the compounds containing metals in the alkali metals in No. I cluster and the alkali earth metals in No. II cluster listed in the elements periodic table. The compounds selected on priority are sodium hydroxide and potassium hydroxide among the salts of carbonates, bicarbonates, hydrides and hydroxides. The described CTS derivatives in this invention are the chitosan (CTS), oligosaccharide and chitin derivatives with molecular weight greater than 500.

The described polyamine derivatives that carry at least one dithio-formate (dithiocarbamate) means that the polyamine derivatives' amino of the polyamine derivatives contains at least one dithio-formate (dithiocarbamate). The molecular weight of the polyamine mentioned in this invention is less than 500.

The polyamine derivatives mentioned right in this invention can be manufactured by this way: the diamine compounds polyamine compounds react with the base solution, adding two drops of carbon disulfide, produces the polyamine derivatives containing at least one dithio-formate (dithiocarbamate). The base solution mentioned here is selected on the priority in the compounds containing metals in the alkali metals in No. I cluster and the alkali earth metals in No. II cluster listed in the elements periodic table. The solutions of compounds selected on priority are sodium hydroxide and potassium hydroxide among the salts of carbonates, bicarbonates, hydrides and hydroxides.

The diamine compounds or the polyamine compounds that are used as raw materials for the manufacture of the polyamine derivatives for this invention include the aromatic polyamine or diamine compounds, alicyclic polyamine or diamine compounds or aliphatic polyamine or diamine compounds. The selected ones are based on the priority with the general formula II:

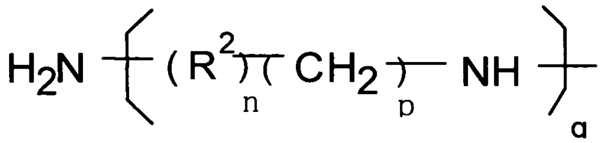
General Structural formula II

Where: $R^2$ is aromatic ring and/or aliphatic ring, n is an integer of 0 or 1; p is an integer in the range of 0-10; q is an integer in the range of 0-10000. The mentioned aromatic compounds mean the carbon rings containing 6 to 18 carbon atoms within it or the heterocyclic compounds, where benzene heterocyclic compounds and naphthalene heterocyclic compounds are the priorities. On the heterocyclics, there may be one or more substituents, such as methyl, hydroxyl, and halide atoms etc.

The mentioned aliphatic ring compounds mean the carbon rings containing 6 to 18 carbon atoms within it or the heterocyclic compounds, where cyclohexyl compounds and the compounds with similar structures are the priorities. The priorities selected compounds in the general formula II are the ethylene amine, divinyl triadamine etc. The compounds with the general formula II carry at least one dithio-formate (dithiocarbamate) has the general structural formula III:

$$R^3R^4N\ [(R^2)_n\ (CH_2)_p\ NR^5]q$$

Where: $R^2$ is aromatic ring and/or aliphatic ring,
$R^3$, $R^4$ and $R^5$ may or may not be the same, they are each H or

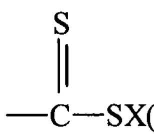 (X:Na, K, $NH_4$, 1/2Ca,1/2Mg)

but the constrain is that $R^3$, $R^4$ and $R^5$ cannot be H simultaneously. n is an integer of 0 or 1; p is an integer in the range of 0-10; q is an integer in the range of 0-10000.

The definitions of aromatic ring and/or aliphatic ring in the general formula III and II are the same.

Based on optimization by priority, the described polyamine derivatives with general structural formula III has functionality in the range of 1.0 and 1.5mol/mol. Based on more optimal selection by priority, the described polyamine derivatives with general structural formula has functionality in the range of 1.0 and 2.0mol/mol.

Based on more optimal selection by priority, the described polyamine derivatives with general structural formula III carry at least one dithio-formate (dithiocarbamate) means that the polyamine derivatives contains carrying one or more sodium dithiocarbamate , potassium dithiocarbamate, ammonium dithiocarbamate, calcium dithiocarbamate, magnesium dithiocarbamate. Their functionality is in the range of 1.0 and 1.5mol/mol.

When treating the waste water containing heavy metal ions using the chelate compounds of heavy metals in this invention, the product of this invention can be put into the waste water pool, then stir it, settle it down and filter the sediments and the pollutants will be removed. In the case of treating waste burned ash with this product, just spray this product with suitable amount of water to the completely kneaded ash in a kneader.

**Examples**

Example 1:

Take 5 grams of CTS with molecular weight greater than 10000, put it to a four-holed flask equipped with a returning current condenser and a thermometer, add 500ml of water, 2.5 grams of NaOH, stir them and raise the temperature to 35 °C, add 5 ml of carbon disulfide, under the temperature of 40 °C for 3 hours, then raise the temperature to 80 °C, keep this reaction for 8 hours. Stop heating, then cooling down the reactant to room temperature, it is the solution of CTS carrying sodium dithio-formate (dithiocarbamate). Filter it, dry it in vacuum, the solid product is the CTS derivative carrying sodium dithio-formate (dithiocarbamate), its functionality is 0.63mmol/g CTS. S content assayed is reported 4.04%.

Example 2:

Take 10 grams of CTS with molecular weight greater than 15000, put it to a four-holed flask equipped with a returning current condenser and a thermometer, add 1500ml of water, 2.5 grams of KOH, stir them and raise the temperature to 35 °C, add 5 ml of carbon disulfide, under the temperature of 40 °C for 3 hours, then raise the temperature to 80 °C, keep it reaction for 10 hours. Stop heating, then cooling down the reactants to room temperature, they are the solutions of CTS carrying sodium dithio-formate (dithiocarbamate). Filter it, dry it in vacuum, the solid product is the CTS derivatives carrying potassium dithio-formate (dithiocarbamate), its functionality is 0.39mmol/g CTS. S content assayed is reported 2.53%.

Example 3:

Take 10 grams of CTS with molecular weight greater than 5000, put it to a four-holed flask equipped with a returning current condenser and a thermometer, add 1500ml of water, 1.5 grams of $Ca(OH)_2$, stir them and raise the temperature to 40 °C, add 2.5 ml of carbon disulfide, under the temperature of 45 °C for 2 hours, then raise the temperature to 70 °C, keep it reaction for 6 hours. Stop heating, then cooling down the reactants to room temperature, they are the solutions of CTS carrying calcium dithio-formate (dithiocarbamate). Filter it, dry it in vacuum, the solid product is the CTS derivatives carrying calcium dithio-formate (dithiocarbamate), its functionality is 0.76mmol/g CTS. S content assayed is reported 3.21%.

Example 4:

Take 60 grams of ethyl diamine, put it to a four-holed flask equipped with a returning current condenser and a thermometer, add 200ml of 20% NaOH solution, stir them for 30 minutes, add 80 grams of carbon disulfide, under the temperature of 40 °C for 3 hours, then raise the temperature to 50 °C, keep it reaction for 2 hours. Stop heating, then cooling down the reactants to room temperature. Filter it, dry it, vaporize it and the solid product is the ethyl amine-(sodium dithiocarbamate) validated by a nuclear magnetic resonance spectrometer. C: 24.76%, H: 3.05%, N: 15.38%, S: 32.77% contents assayed is reported.

Example 5:

Take 120 grams of cyclohexyl diamine, put it to a four-holed flask equipped with a returning current condenser and a thermometer, add 400ml of 10% KOH solution, stir them for 40 minutes, add 180 grams of carbon disulfide, under the temperature of 40 °C for 4 hours, then raise the temperature to 50 °C, keep it reaction for 2 hours. Stop heating, then cooling down the reactants to room temperature. Filter it, dry it, vaporize it and the solid product is the cyclohexyl diamine-(potassium dithiocarbamate) validated by a nuclear magnetic resonance spectrometer. C: 34.15%, H: 4.19%, N: 10.48%, S: 22.68% contents assayed is reported.

Example 6:

Take 150 grams of benzene diamine, put it to a four-holed flask equipped with a returning current condenser and a thermometer, add 400ml of 10% KOH solution, stir them for 120 minutes, add 300 grams of carbon disulfide, under the temperature of 45 °C for 12 hours, then raise the temperature to 55 °C, keep it reaction for 4 hours. Stop heating, then cooling down the reactants to room temperature. Filter it, dry it, vaporize it and the solid product is the benzene diamine -(potassium dithiocarbamate) validated by a nuclear magnetic resonance spectrometer. C: 35.15%, H: 3.20%, N: 11.25%, S: 20.31% contents assayed is reported.

Example 7:

Take 1200 grams of poly ethyl amine, put it to a four-holed flask equipped with a returning current condenser and a thermometer, add 1500ml of 10% NaOH solution, stir them for 40 minutes, add 1800 grams of carbon disulfide, under the temperature of 40 °C for 10 hours, then raise the temperature to 50 °C, keep it reaction for 2 hours. Stop heating, then cooling down the reactants to room temperature. Filter it, dry it, vaporize it and the solid product is the poly ethyl amine -(potassium dithiocarbamate) validated by a nuclear magnetic resonance spectrometer. S: 27.65% content assayed is reported.

Example 8:

Take 100 milligrams of CTS from the product of example 1, add 50ml of water, this solution is ready for use.

Take the 200ml of wastewater containing silver ion of 200mg/l, put 5ml of the ready CTS solution to the wastewater sample, stir them for 5 minutes, settle them down for 30 minutes. Filter the sediments. The measured wastewater sample contains silver ion content of 0.9mg/l.

Example 9:

Take 20 milligrams of CTS from the product of example 1 and 980 milligrams of ethyl amine derivatives made from example 3, add 10ml of water, this mixed solution is ready for use.

Take the 200ml of wastewater containing silver ion of 200mg/l, put 1.0ml of the ready mixed solution to the wastewater sample, stir them for 5 minutes, settle down for 30 minutes. Filter the sediments. The measured wastewater sample contains silver ion content of 0.7mg/l.

Example 10:

Take 1.0 grams of CTS from the product of example 2, where the weight percentage proportion is 7% of the CTS derivatives, benzene diamine potassium dithio-formate (dithiocarbamate) is 93%, add 10ml of water, this mixed solution is ready for use.

Take the burned garbage ash 100 grams containing lead ion of 500ppm, zinc 300ppm, copper 120ppm, cadmium 100ppm. Take 50grams of the ash sample, 5.0ml of the ready mixed solution to the ash sample, kneading them for 20 minutes. The other 50 grams of ash sample that was not add the mixed solution is a reference sample, then leach these two samples separately according to the TCLP criteria, the contents of heavy metals contents assayed by atomic absorption is reported as the following table.

| Sample | Content of Leached Metal Ion, ppm | | | |
|---|---|---|---|---|
| | Pb | Zn | Cu | Cd |
| Experimental | 0.5 | 0.4 | none | none |
| Reference | 25 | 11.5 | 0.5 | 0.2 |

Example 11: Take 0.6grams of CTS from the product of example 1, where the weight percentage proportion is 14% of the CTS derivatives, poly ethyl amine derivatives potassium dithio-formate (dithiocarbamate) is 86%, add 10ml of water, this mixed solution is ready for use.

Take the 200ml of wastewater sample from the electrodepositing plant containing nickel ion of 123ppm, put 1.2ml of the ready mixed solution to the wastewater sample, stir them for 5 minutes, settle down for 30 minutes. Filter the sediments. The wastewater sample contains nickel ion content of 2.8ppml assayed is reported.

Example 12:

Take 65%wt of CTS derivatives from the product of example 2, and 35%wt derivatives of cyclohexyl-amine potassium dithiocarbamate, add 100ml of de-ionized water, this mixed solution is ready for use.

Take the 200ml of wastewater sample containing lead ion of 174ppm, whose Ph value is 4.5, put 1.5ml of the ready mixed solution to the wastewater sample, stir them for 5 minutes, settle down for 2 seconds, a block of black sediment is observed and after 30 minutes settling down, it is separated from the waste water. Filter the sediments. The treated wastewater becomes very clear and the sample contains lead ion content of 0.1ppm assayed by the atomic adsorption and spectrophotometric determination is reported.

Example 13:

Take 100 milligrams of CTS from the product of example 1, and take 2 milligrams of ethylene diamine derivatives from the product of example 3, add 10ml of water, this mixed solution is ready for use.

Take the 200ml of wastewater sample containing silver ion of 200mg/l, put 1.0ml of the ready mixed solution to the wastewater sample, stir them for 5 minutes, settle down for 30 minutes. Filter the sediments. The measured wastewater sample contains silver ion content of 0.9mg/l.

Example 14:

Take 1.0 grams of CTS from the product of example 3, where the weight percentage proportion is 10% of the CTS derivatives, poly ethyl diamine potassium dithio-formate (dithiocarbamate) is 90%, add 10ml of water, this mixed solution is ready for use.

Take the burned garbage ash 100 grams containing lead ion of 500ppm, zinc 300ppm, copper 120ppm, cadmium 100ppm. Take 50grams of the ash sample, 5.0ml of the ready mixed solution to the ash sample, kneading them for 20 minutes. The other 50 grams of ash sample that was not add the mixed solution is a reference sample, then leach these two samples separately according to the TCLP criteria, the contents of heavy metals contents assayed by atomic absorption is reported as the following table.

| | Content of Leached Metal Ion, ppm | | | |
|---|---|---|---|---|
| | Pb | Zn | Cu | Cd |
| Experimental | 0.8 | 0.9 | none | none |
| Reference | 25 | 11.5 | 0.5 | 0.2 |

## Claims

1. A kind of chelator compound of heavy metals containing chitosan (CTS) derivatives, which contains the following contents:

| Components | Content (wt%) |
|---|---|
| at least one dithio-formate (dithicarbamate) CTS derivatives | 1-100 |
| at least one dithio-formate polyamine derivatives | 0-99 |

2. According to Claim 1, the described CTS derivatives that carry at least one dithio-formate (dithiocarbamate) means that the CTS derivatives' all sugar rings at the 2- carbon amino or the 6- carbon of hydroxyl contains at least one dithio-formate (dithiocarbamate).

3. According to Claim 1, the described polyamine derivatives that carry at least one dithio-formate (dithiocarbamate) means that the polyamine derivatives' amino of the polyamine contains at least one dithio-formate (dithiocarbamate).

4. According to Claim 1, the described CTS derivatives that carry at least one dithio-formate (dithiocarbamate) has the general structural formula I:

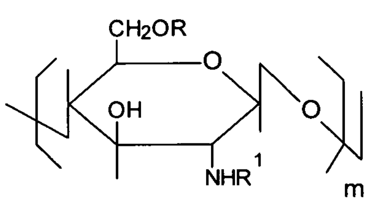

Where:
R : H or

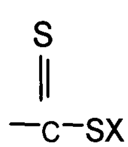

(X:Na, K, $NH_4$, 1/2Ca, 1/2Mg)
R':H,

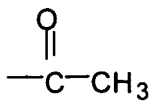 or 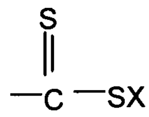

(X: Na, K, $NH_4$, 1/2Ca, 1/2Mg)
m: an integer in the range of 10~100000.

**5.** According to Claim 1, the described polyamine derivatives that carry at least one dithio-formate (dithiocarbamate) has the general structural formula III:

$$R^3R^4N\,[(R^2)_n\,(CH_2)_p\,NR^5]\,q$$

(General structural formula III).
**Where:** $R^2$ is aromatic ring and/or aliphatic ring,
$R^3$, $R^4$ and $R^5$ may or may not be the same, they each indicate H or

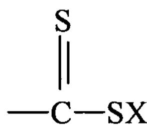(X:Na, K, $NH_4$, 1/2Ca,1/2Mg)

but the contrain is $R^3$, $R^4$ and $R^5$ cannot be H simultaneously. n is an integer of 0 or 1; p is an integer in the range of 0-10; q is an integer in the range of 1-10000.

**6.** According to Claim 1 or Claim 2, the described CTS derivatives are the chitosan (CTS), oligosaccharide and chitin derivatives with molecular weight greater than 500.

**7.** According to Claim 1 or Claim 3, the described polyamine derivatives that carry at least one dithio-formate (dithiocarbamate) means that the polyamine derivatives' amino of the polyamine derivatives contains at least one dithioformate (dithiocarbamate). The molecular weight of the polyamine mentioned in this invention is less than 500.

**8.** According to Claim 1 or Claim 2, the described CTS derivatives are the chitosan (CTS), oligosaccharide and chitin derivatives carrying one or more sodium dithiocarbamate, potassium dithiocarbamate, ammonium dithiocarbamate, calcium dithiocarbamate, magnesium dithiocarbamate.

**9.** According to Claim 4, the functionality of the described CTS derivatives is in the range of 0.1 and 1.0mmol/g.

**10.** According to Claim 1 and Claim 3, the described polyamine derivatives that carry at least one dithio-formate (dithiocarbamate) especially means that the polyamine derivatives contains carrying one or more sodium dithiocarbamate, potassium dithiocarbamate, ammonium dithiocarbamate, calcium dithiocarbamate, magnesium dithiocarbamate.

**11.** According to Claim 5, the described polyamine derivatives that carry at least one dithio-formate (dithiocarbamate) means that the functionality is in the range of 1.0 and 1.5mol/mol.

**12.** A kind of process for the treatment of wastewater containing heavy metal ions, the described CTS derivatives of the heavy metals chelate compounds in Claim 1 is mixed with the described wastewater.

**13.** A kind of process for the treatment of waste mud containing heavy metal ions, the described CTS derivatives of the heavy metals chelate compounds in Claim 1 is mixed with the described waste mud.

**14.** A kind of process for the treatment of burned ash containing heavy metal ions, the described CTS derivatives of the heavy metals chelate compounds in Claim 1 is mixed with the described garbage burned ash.

**15.** A kind of process for the treatment of soil polluted by heavy metal ions, the described CTS derivatives of the heavy metals chelate compounds in Claim 1 is mixed with the described soil polluted by heavy metal ions.

| **INTERNATIONAL SEARCH REPORT** | International application No. PCT/CN03/00589 |
|---|---|

A. CLASSIFICATION OF SUBJECT MATTER

IPC7 C08L5/08, C09K5/17,C02F1/62,11/14,B09B3/00,B09C1/02

According to International Patent Classification (IPC) or to both national classification and IPC

B. FIELDS SEARCHED

Minimum documentation searched (classification system followed by classification symbols)

IPC C08L5/00,5/08,C08B37/06,C02F1/00,1/62,1/52,11/00,11/14,C09K5/17,5/00,B01J20/22,20/24, B09B3/00,B09C1/00,1/02

Documentation searched other than minimum documentation to the extent that such documents are included in the fields searched

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP62-262743A(Lion Corp.),14,Nov.1987(14.11.1987), example 1—6 | 1,2,4,6,8,9,12-15<br>3,5,7,10,11 |
| X<br>Y | JP9-174020A(MIYOSHI YUSHI KK),08,Jul.1997(08.07.1997), example 7and 8 | 1,2,4,6,8,9,12-15<br>3,5,7,10,11 |
| X<br>Y | JP62-266196A(Lion Corp.),18,Nov.1987(18.11.1987), example 1—9 | 1,2,4,6,8,9,12-15<br>3,5,7,10,11 |
| Y | JP9-040936A(MIYOSHI YUSHI KK),10,Feb.1997(10.02.1997), example 1-11 | 3,5,7,10,11 |

☒ Further documents are listed in the continuation of Box C. ☒ See patent family annex.

* Special categories of cited documents:

"A" document defining the general state of the art which is not considered to be of particular relevance

"E" earlier application or patent but published on or after the international filing date

"L" document which may throw doubts on priority claim (S) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| 12.Dec.,2003 | 25 DEC 2003 (25.12.03) |
| Name and mailing address of the ISA/CN<br>6 Xitucheng Rd., Jimen Bridge, Haidian District, 100088 Beijing, China<br>Facsimile No. 86-10-62019451 | Authorized officer<br>Zhu fang<br>Telephone No. 86-10-62093057 |

Form PCT/ISA /210 (second sheet) (July 1998)

**INTERNATIONAL SEARCH REPORT**

International application No.
PCT/CN03/00589

C (Continuation). DOCUMENTS CONSIDERED TO BE RELEVANT

| Category* | Citation of document, with indication, where appropriate, of the relevant passages | Relevant to claim No. |
|---|---|---|
| Y | EP581164A(MIYOSHI YUSHI KK),02.Feb..1994(02.02.94),example 1—4 | 1,2,4,6,8,9,12-15 |
| Y | EP211305A(MIYOSHI YUSHI KK),21.Jul.1987(21.07.87),example 1—20 | 1,2,4,6,8,9,12-15 |
| Y | US5387365(MIYOSHI YUSHI KK),07.Feb.1995(07.0.2.95),example1-17 | 1,2,4,6,8,9,12-15 |
| A | US2168375(Visking corp.),09.SEP.37(09.09.37)，claim1 | 1,2,4,6,8,9,12-15 |
| A | JP5-50055A(MIYOSHI YUSHI KK),02,March 1993(02.03.93)，example 1-4 | 1,2,4,6,8,9,12-15 |

Form PCT/ISA /210 (continuation of second sheet (1)) (July 1998)

**INTERNATIONAL SEARCH REPORT**
Information on patent family members

International application No.
PCT/CN03/00589

| Patent document cited in research report | Publication date | Patent family member(s) | Publication date |
|---|---|---|---|
| JP62-262743A | 14.11.1987 | none | |
| JP9-174020A | 08.07.1997 | none | |
| JP62-266196A | 18.11.1987 | none | |
| JP9-040936A | 10.02.1997 | none | |
| EP581164A | 02.02.1994 | US5395896 | 07.0.3.1995 |
| | | JP6-49636A | 22.02.1994 |
| | | AU4208593A | 03.02.1994 |
| EP211305A | 21.07.1987 | US4731187 | 15.03.1988 |
| | | JP62-033590A | 13.02.1987 |
| US5387365 | 07.0.2.1995 | EP433580A | 26.06.1991 |
| | | JP3-231921A | 15.10.1991 |
| US21683757 | 09.09.1937 | none | |
| JP5-50055A | 02.03.1993 | JP3243261B2 | 07.01.2002 |

Form PCT/ISA /210 (patent family annex) (July 1998)